# EUROPEAN PATENT SPECIFICATION

(11) **EP 3 849 046 B1**
(45) Date of publication and mention of the grant of the patent: **16.09.2026**
(21) Application number: 19857029.3
(22) Date of filing: 14.06.2019
(51) Int. Cl.: H02J 7/02, H02J 9/06, H01M 10/44, H01M 10/48, H01M 50/51, H02J 7/54, H02J 7/80

(54) **ELECTRICITY STORAGE DEVICE AND CHARGING METHOD**
ELEKTRIZITÄTSSPEICHERVORRICHTUNG UND LADEVERFAHREN
DISPOSITIF DE STOCKAGE D'ÉLECTRICITÉ ET PROCÉDÉ DE CHARGE

(30) Priority: 07.09.2018 JP 2018168047
(43) Date of publication of application: 14.07.2021
(73) Proprietor: FDK Corporation, Tokyo 108-8212 (JP)
(72) Inventor: MOCHIZUKI, Shun, Tokyo 108-8212 (JP)
(74) Representative: Epping - Hermann - Fischer
(86) International application number: PCT/JP2019/023595
(87) International publication number: WO 2020/049824

(56) References cited:
- WO-A1-2011/027828
- DE-A1- 102012 201 602
- FR-A1- 2 976 743
- JP-A- 2000 014 042
- JP-A- 2010 009 840
- JP-A- 2012 005 173

## Description

### Technical Field

The present invention relates to a power storage device and a charging method.

### Background Art

A power storage system such as an uninterruptible power supply device can supply electric power to a load device for a certain period of time even during power outage, and thus it has been widely used as a backup power supply for BCP countermeasures in the event of a disaster, for example. In normal times when AC power is supplied from a commercial power source to a load device, the power storage system branches the AC power to receive power, and converts the received power into DC power, and then charges a storage battery by a charging circuit. When power outage occurs, the power storage system maintains power supply to the load device by converting the power charged in the storage battery into AC power with an inverter and supplying the AC power to the load device.

The power storage system as described above can be easily managed by configuring the power storage system as a power storage unit including a plurality of storage batteries, and it is further adaptable to a load device requiring a high voltage by connecting a plurality of power storage units in series. However, in such a power storage system, a charging voltage is applied to the whole of the plurality of power storage units connected in series at the time of charging, and when variation occurs among respective unit voltages of the plurality of power storage units, from the viewpoint of preventing overcharging, it is necessary to terminate charging at the time point when any unit voltage has reached full charge. Therefore, the power storage system as described above may be restricted to perform charging and discharging with only a power capacity smaller than the originally designed capacity.

In order to suppress the variation in unit voltage among the plurality of power storage units, a battery system is constructed in a prior art described in Patent Document 1 by a storage battery group A including a plurality of storage batteries connected in series and one storage battery B having a lower capacity than the storage battery group A, which are connected in series. As a result, the prior art of Patent Document 1 prevents all the storage batteries included in the storage battery group A from being overcharged and overdischarged by managing SOC (State of Charge) of the storage battery group A within a certain range. Patent Document 2 concerns a method for managing and diagnosing a battery.

### Prior Art Document

### Patent Document

Patent Document 1: Japanese Patent Laid-Open No. 2010-9840
Patent Document 2: FR 2 976 743 A1

### Summary of the Invention

### Problems to be solved by the Invention

However, the above-mentioned prior art is intended to suppress occurrence of overcharging and overdischarging by equalizing the SOCs of the plurality of storage batteries, but a configuration thereof for that purpose limits the power capacity which can be charged in the storage batteries included in the battery system.

An object of the present invention, which has been made in view of such a situation, is to provide a power storage device capable of suppressing reduction in rechargeable power capacity while equalizing the capacities of a plurality of power storage units connected in series during charging of the plurality of power storage units, and a method of charging the power storage device.

### Means for Solving the Problems

In order to achieve the above object, an aspect of the present invention is directed to a power storage device comprising: a plurality of power storage units connected in series; and a control unit for monitoring a unit voltage of each of the plurality of power storage units and controlling each of the plurality of power storage units, wherein each of the power storage units includes an power storage portion and a charge switch which are connected to each other in series between charge/discharge terminals, and a bypass switch providing a bypass between the charge/discharge terminals, and for the plurality of power storage units to be charged in series, the control unit individually sets a charging mode in which the power storage portion is charged with a constant current by controlling the bypass switch to be set to OFF while controlling the charge switch to be set to ON, and a bypass mode in which the charging of the power storage portion is stopped by controlling the bypass switch to be set to ON while controlling the charge switch to be set to OFF, thereby equalizing the unit voltages.

### Advantageous Effects of the Invention

According to the present invention, there can be provided a power storage device capable of suppressing reduction in rechargeable power capacity while equalizing capacities of a plurality of power storage units connected in series during charging of the plurality of power storage units, and a method of charging the power storage device.

### Brief Description of the Drawings

FIG. 1 is a circuit diagram of a backup power supply using a power storage device according to the present invention.
FIG. 2 is a circuit diagram showing a configuration of the power storage device according to the present invention.
FIG. 3 is a graph showing changes in charging voltage, the number of charging units, and a total voltage during charging of the power storage device according to the present invention.

### Mode for Carrying out the Invention

Embodiments of the present invention will be described hereunder in detail with reference to the drawings. Note that the present invention is not limited to the contents described below, and any modification and implementation may be made without changing the subject matter thereof. Further, all the drawings used for describing the embodiments schematically show components, and are subjected to partially emphasis, enlargement, reduction, or omission in order to deepen the understanding of the components. Therefore, the drawings may not accurately represent the scales, shapes and the like of the components.

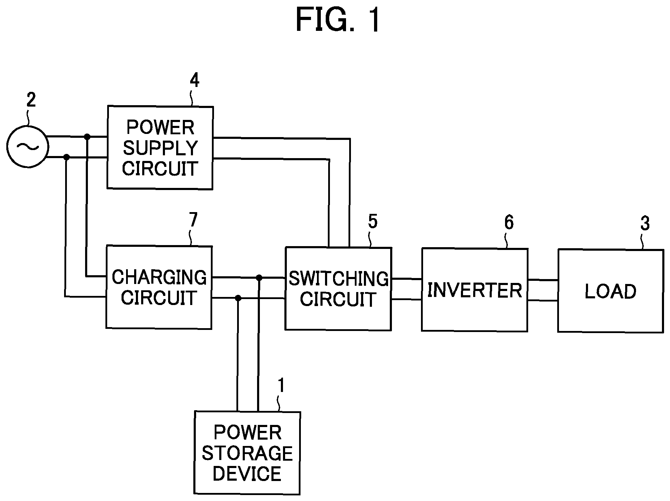

FIG. 1 is a circuit diagram of a backup power supply using a power storage device 1 according to the present invention. More specifically, FIG. 1 is a circuit diagram illustrating the configuration of a backup power supply provided in a power supply path from a commercial power source 2 to a load 3.

As describing a detailed configuration later, the power storage device 1 is a so-called uninterruptible power system (UPS) that can be charged with power supplied from the commercial power source 2 and enables power supply to the load 3 to be continued by discharging under power outage of the commercial power source 2.

In the present embodiment, power of AC100V output from the commercial power source 2 is converted to DC380V in a power supply circuit 4, and supplied to a switching circuit 5. In normal times when no power outage occurs, the power of DC380V supplied to the switching circuit 5 is reconverted to AC100V in an inverter 6, and output to the load 3.

Further, the power of AC100V output from the commercial power source 2 is converted into DC power in a charging circuit 7, and also converted into a voltage required by the power storage device 1 to be used for charging the power storage device 1.

When power outage occurs in the commercial power source 2, the power storage device 1 outputs DC power to the inverter 6 via the switching circuit 5. As a result, the power of DC380V output from the power storage device 1 is reconverted to AC100V in the inverter 6 and output to the load 3. In other words, the switching circuit 5 outputs the power input from the power supply circuit 4 to the inverter 6 in normal times when no power outage occurs, and outputs the power input from the power storage device 1 to the inverter 6 when power outage occurs, whereby the power supply source is switched.

Note that the configuration of the backup power supply using the power storage device 1 of the present invention is not limited to the circuit configuration described above, and various changes can be made depending on conditions such as applicable equipment, etc.

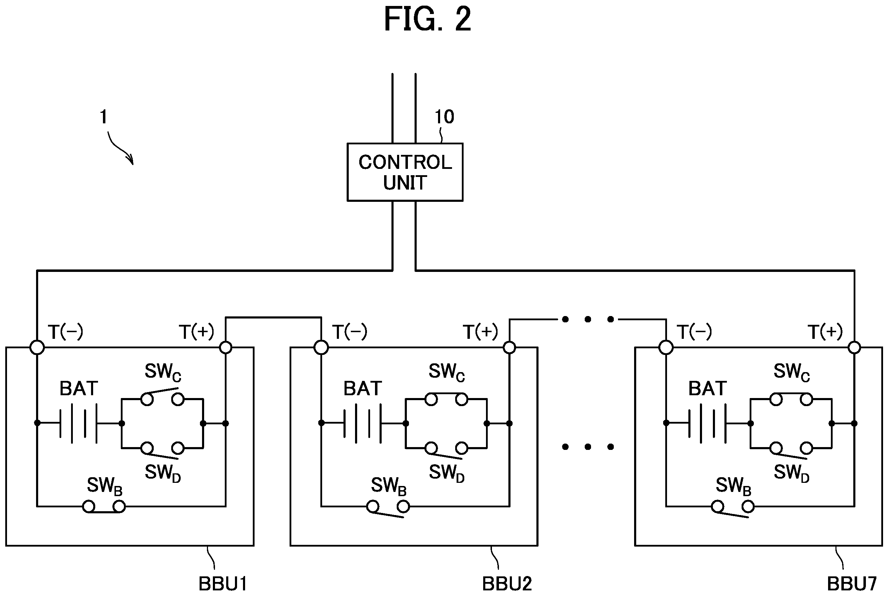

A configuration of the power storage device 1 will be described in more detail. FIG. 2 is a circuit diagram showing the configuration of the power storage device 1 according to the present invention.

The power storage device 1 includes a first power storage unit BBU1 to a seventh power storage unit BBU7 which are connected in series, and a control unit 10. Here, a configuration including power storage units of the series connection number N_{TOTAL}=7 is illustrated in the present embodiment. However, the number of power storage units included in the power storage device 1 is not limited to this number, and the number is appropriately adjusted so as to obtain an output voltage required for the load 3.

The first power storage unit BBU1 has charge/discharge terminals T(-) and T(+) formed therein, and includes an power storage portion BAT and a charge switch SW_{C} that are connected in series between the charge/discharge terminals in the first power storage unit BBU1. Further, the first power storage unit BBU1 includes a discharge switch SW_{D} which is connected in parallel with the charge switch SW_{C}. Further, the first power storage unit BBU1 has a bypass path formed between the charge/discharge terminals, and a bypass switch SW_{B} is provided in the bypass path.

Here, the power storage portion BAT is made up of a plurality of battery cells each made of, for example, a nickel metal hydrogen battery or a nickel cadmium battery, which are connected in series. Further, the charge switch SW_{C}, the discharge switch SW_{D}, and the bypass switch SW_{B} are composed of switching elements operating at high speed, such as MOSFETs (Metal-Oxide-Semiconductor Field-Effect Transistors) and IGBTs (Insulated Gate Bipolar Transistors).

The charge switch SW_{C} is controlled to be set to ON, the discharge switch SW_{D} is controlled to be set to OFF, and the bypass switch SW_{B} is controlled to be set to OFF, whereby the first power storage unit BBU1 is set to a charging mode in which the power storage portion BAT is charged with a charging voltage applied between the charge/discharge terminals. Further, the charge switch SW_{C} is controlled to be set to OFF, the discharge switch SW_{D} is controlled to be set to ON, and the bypass switch SW_{B} is controlled to be set to OFF, whereby the first power storage unit BBU1 is set to a discharging mode in which the voltage of the power storage portion BAT as a unit voltage is output between the charge/discharge terminals.

Here, the configurations of a second power storage unit BBU2 to the seventh power storage unit BBU7 are the same as the configuration of the first power storage unit BBU1 described above, and thus detailed description thereof will be omitted.

The control unit 10 is a so-called BMS (Battery Management System) that includes, for example, a well-known microcomputer control circuit and controls charging/discharging of the power storage device 1. When charging the power storage device 1, the control unit 10 receives power from the charging circuit 7, and applies a charging voltage V_{C} between the charge/discharge terminal T(-) of the first power storage unit BBU1 and the charge/discharge terminal T(+) of the seventh power storage unit BBU7. Further, when discharging the power storage device 1, the control unit 10 supplies the switching circuit 5 with a total voltage V_{TOTAL} between the charge/discharge terminal T(-) of the first power storage unit BBU1 and the charge/discharge terminal T(+) of the seventh power storage unit BBU7.

More specifically, the control unit 10 is configured to be capable of monitoring the respective unit voltages of the first power storage unit BBU1 to the seventh power storage unit BBU7, and individually controlling the charge switch SW_{C}, the discharge switch SW_{D}, and the bypass switch SW_{B} of each of the power storage units.

When charging the first power storage unit BBU1 to the seventh power storage unit BBU7 in series, the control unit 10 can set a bypass mode in which charging for a specific power storage unit is stopped. More specifically, for example, when setting the first power storage unit BBU1 to the bypass mode, the control unit 10 controls the charge switch SW_{C}, the discharge switch SW_{D} and the bypass switch SW_{B} of the first power storage unit BBU1 to be set to OFF, OFF and ON respectively, whereby the charge/discharge terminals of the first power storage unit BBU1 are shortcircuited to prohibit the power storage portion BAT from being charged. In this case, in the series charging of the respective power storage units, the second power storage unit BBU2 to the seventh power storage unit BBU7 are charged, whereas the first power storage unit BBU1 is excluded from the series charging.

Subsequently, a charging method for serially charging the first power storage unit BBU1 to the seventh power storage unit BBU7 of the power storage device 1 will be described.

The power storage device 1 can arbitrarily set a timing of charging in a case where the total voltage V_{TOTAL}, which is the total of the unit voltages of the first power storage unit BBU1 to the seventh power storage unit BBU7, drops to a predetermined threshold value or less, in a case of recovering from power outage, and the like. In the following description, it is assumed that charging is started from a state where the total voltage V_{TOTAL} drops to a discharge termination voltage V_{CUTOFF}. Further, the total voltage V_{TOTAL} in the present embodiment will be described on the assumption that the discharge termination voltage V_{CUTOFF} is 265 V and a charging upper limit voltage is 380 V.

Further, the control unit 10 continuously monitors the voltage of each of the power storage portions BAT of the first power storage unit BBU1 to the seventh power storage unit BBU7 at least during charging of the power storage device 1 (voltage monitoring step). Further, the control unit 10 performs the series charging of the respective power storage units while the number Nc of power storage units to be set to the charging mode is controlled to be equal to a minimum natural number satisfying N_{C}≥V_{CUTOFF}×N_{TOTAL}/V_{TOTAL} (series charging step) .

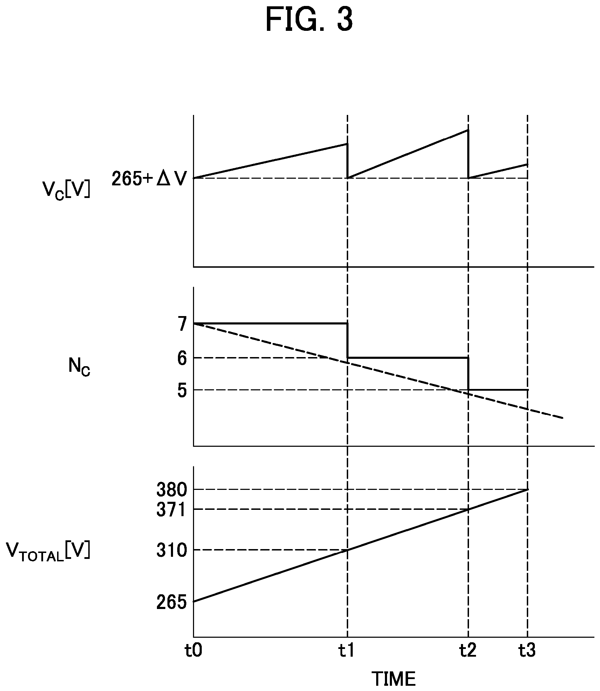

FIG. 3 is a graph showing changes in the charging voltage Vc, the number of charging units N_{C}, and the total voltage V_{TOTAL} during charging of the power storage device 1 according to the present invention. The horizontal axis of FIG. 3 represents an elapsed time from a charging start timing t0.

At the charging start timing t0, the control unit 10 calculates the number N_{C} of power storage units to be set to the charging mode among the plurality of power storage units included in the power storage device 1, and starts the series charging. Here, the power storage device 1 sets all the power storage units to the charging mode and starts the series charging from V_{CUTOFF}×N_{TOTAL}/V_{TOTAL}=7 because the discharge termination voltage V_{CUTOFF} is equal to 265 V, the series connection number N_{TOTAL} of power storage units is equal to 7, and the total voltage V_{TOTAL} at the start time of charging is equal to 265 V.

When charging of the power storage device 1 is started, the total voltage V_{TOTAL} also increases as the charging progresses. Here, the control unit 10 controls the charging voltage V_{C} so that the charging voltage V_{C} is equal to a voltage value obtained by adding a constant potential difference ΔV to the increasing total voltage V_{TOTAL}, whereby the power storge units in the charging mode can be charged with a constant current.

When the total voltage V_{TOTAL} has reached 310 V at a timing t1, the control unit 10 sets the number N_{C} of power storage units to be set to the charging mode to 6 from V_{CUTOFF}×N_{TOTAL}/V_{TOTAL}=5.98, and sets the remaining one power storage unit to the bypass mode. At this time, in order to equalize the unit voltages of the power storage units, the control unit 10 sets, to the bypass mode, a power storage unit in which charging is most advanced (the unit voltage is high) among the first power storage unit BBU1 to the seventh power storage unit BBU7, and continues the series charging. Further, since the number of power storage units to be set to the charging mode decreases, the control unit 10 controls such that the charging voltage V_{C} returns to the discharge termination voltage V_{CUTOFF}=265 V again, and the charging voltage V_{C} increases according to the total of the unit voltages of the power storage units set in the charging mode.

Here, when there is a power storage unit to be set to the bypass mode, the unit voltage of one of the power storage units in the charging mode and the unit voltage of the power storage unit in the bypass mode may be reversed as the charging progresses. In this case, the control unit 10 can promote equalization of the unit voltages by interchanging the modes of both the power storage units.

When the total voltage V_{TOTAL} has reached 371 V at a timing t2, the control unit 10 sets the number N_{C} of the power storage units to be set to the charging mode to 5 from V_{CUTOFF}×N_{TOTAL}/V_{TOTAL}=5, and sets the remaining two power storage units to the bypass mode. At this time, in order to equalize the unit voltages of the power storage units, the control unit 10 sets, to the bypass mode, two power storage units in which the charging is most advanced among the first power storage unit BBU1 to the seventh power storage unit BBU7, and continues the series charging. Further, since the number of power storage units to be set to the charging mode decreases, the control unit 10 controls such that the charging voltage V_{C} returns to the discharge termination voltage V_{CUTOFF}=265 V again, and the charging voltage V_{C} increases according to the total of the unit voltages of the power storage units set in the charging mode.

After the timing t2, as in the case of the period from the timing t1 to the timing t2, the control unit 10 also controls such that the unit voltages are equalized by switching the power storage units set in the charging mode and the power storage units set in the bypass mode as the charging progresses. At this time, since the number of power storage units set in the bypass mode increases in the period from the timing t2 to the timing t3 as compared with the period from the timing t1 to the timing t2, the equalization control of the unit voltages can be performed more finely.

When the total voltage V_{TOTAL} has reached 380 V, which is a charging upper limit voltage, at the timing t3, the control unit 10 stops the charging on all the power storage units on the assumption that the power storage device 1 has fallen into a fully charged state. As a result, the charging on the first power storage unit BBU1 to the seventh power storage unit BBU7 is completed in a state where the difference in unit voltage among the power storage units is reduced as the series charging progresses and thus the unit voltages are equalized. Therefore, each power storage unit is suppressed from falling into an overcharged state, and has been charged until a rechargeable power capacity.

Here, the present embodiment has been described on the assumption that charging is started from a state where the total voltage V_{TOTAL} has dropped to the discharge termination voltage V_{CUTOFF}. However, when the series charging is started, for example, from a state where the total voltage V_{TOTAL} is 310 V, charging is started from a state at the timing t1 of FIG. 3 in which the six power storage units are set to the charging mode.

When power outage occurs during series charging, for all the power storage units, the control unit 10 controls the charge switches SW_{C} and the bypass switches SW_{B} to be set to OFF and controls the discharge switches SW_{D} to be set to ON, thereby setting the first power storage unit BBU1 to the seventh power storage unit BBU7 to the discharge mode all at once. As a result, even when power outage occurs during charging, the power storage device 1 can immediately output the total voltage V_{TOTAL} to the load 3, and can reduce the possibility that power being supplied to the load 3 may be interrupted momentarily.

As described above, the power storage device 1 according to the present invention can equalize the unit voltages by sequentially setting the power storage units to the bypass mode in the series charging of the first power storage unit BBU1 to the seventh power storage unit BBU7. Further, the power storage device 1 can more finely equalize the unit voltages by increasing the number of power storage units to be set to the bypass mode as the series charging progresses. Still further, the power storage device 1 controls the number N_{C} of the power storage units to be set to the charging mode so that the number N_{C} is equal to a minimum natural number satisfying N_{C}≥V_{CUTOFF}×N_{TOTAL}/V_{TOTAL}, whereby the power storage device 1 can increase the number of power storage units to be set to the bypass mode as early as possible and equalize the unit voltages more reliably while suppressing a charging time to be taken for full charge. Even when power outage occurs during charging, the power storage device 1 can suppress momentary interruption in the load 3 by setting the respective power storage units to the discharging mode all at once. Therefore, according to the power storage device 1 according to the present invention, when a plurality of power storage units connected in series is charged, it is possible to suppress reduction in the rechargeable power capacity while equalizing the capacities of the power storage units.

### (Embodiments of the present invention)

A first aspect of the present invention, according to claim 1, is a power storage device comprising a plurality of power storage units connected in series, and a control unit for monitoring a unit voltage of each of the plurality of power storage units and controlling each of the plurality of power storage units, wherein each of the power storage units includes a power storage portion and a charge switch which are connected to each other in series between charge/discharge terminals, and a bypass switch providing a bypass between the charge/discharge terminals, and for the plurality of power storage units to be charged in series, the control unit individually sets a charging mode in which the power storage portion is charged with a constant current by controlling the bypass switch to be set to OFF while controlling the charge switch to be set to ON, and a bypass mode in which the charging of the power storage portion is stopped by controlling the bypass switch to be set to ON while controlling the charge switch to be set to OFF, thereby equalizing the unit voltages.

The power storage device includes the plurality of power storage units connected in series, and these power storage units are charged in series by the control unit. Here, in each power storage unit, the power storage portion and the charge switch are connected to each other in series between the charge/discharge terminals, and the bypass switch is provided so as to bypass between the charge/discharge terminals. Therefore, each power storage unit is set to the charging mode in which the power storage portion is charged by controlling the charge switch to be set to ON and controlling the bypass switch to be set to OFF. Further, each power storage unit is set to the bypass mode in which the power storage portion is bypassed by controlling the charge switch to be set to OFF and controlling the bypass switch to be set to ON.

The control unit controls the charging voltage according to the voltage of the power storage unit set to the charging mode while individually setting each power storage unit to the charging mode or the bypass mode, whereby the unit voltages can be equalized while the respective power storage units are charged in series with a constant current. Therefore, the power storage device can reduce the possibility that only some of the power storage units may be overcharged, and can perform charging up to the upper limit of the power capacity of each power storage unit.

As a result, according to the first aspect of the present invention, in the charging of the plurality of power storage units connected in series, it is possible to suppress reduction in the rechargeable power capacity while equalizing the capacities of the power storage units.

A second aspect of the present invention, according to claim 2, is an power storage device in which, in the foregoing first aspect of the present invention, the control unit increases the number of power storage units to be set to the bypass mode as the charging of the plurality of power storage units progresses.

According to the second aspect of the present invention, in the series charging of the plurality of power storage units, the power storage device can equalize the unit voltages more finely by increasing the number of power storage units to be set to the bypass mode as the state approaches a full charge state.

According to claim 1, the control unit is configured to control the number N_{C} of the power storage units to be set to the charging mode so that the number N_{C} is equal to a minimum natural number satisfying N_{C}≥V_{CUTOFF}×N_{TOTAL}/V_{TOTAL} when a discharge termination voltage of the power storage unit is represented by V_{CUTOFF}, a series connection number of the power storage units is represented by N_{TOTAL}, and a total voltage of the plurality of power storage units is represented by V_{TOTAL}.

In the series charging of the plurality of power storage units, the time required for charging can be shortened by increasing the number of power storage units to be set to the charging mode. Further, the unit voltages can be more reliably equalized by increasing the number of power storage units to be set to the bypass mode. Therefore, the power storage device can perform series charging optimizing both the merits described above by controlling the number N_{C} of the power storage units to be set to the charging mode based on the expression of N_{C}≥V_{CUTOFF}×N_{TOTAL}/V_{TOTAL}.

As a result, according to the first aspect of the present invention, the power storage device can increase the number of power storage units to be set to the bypass mode as early as possible while suppressing a charging time to be taken for full charge, and can more reliably equalize the unit voltages.

A third aspect of the present invention, according to claim is a power storage device in which, in any one of the foregoing first or second aspect of the present invention, the power storage unit includes a discharge switch connected in parallel to the charge switch, and when power outage occurs during charging of the plurality of power storage units, for all the power storage units, the control unit controls the charge switches and the bypass switches to be set to OFF and controls the discharge switches to be set to ON.

According to the third aspect of the present invention, even when power outage occurs during charging, the power storage device can suppress momentary interruption in the load by setting the respective power storage units to the discharge mode all at once.

A fourth aspect of the present invention is a charging method, according to claim 4, that charges a plurality of power storage units connected in series, and comprises a voltage monitoring step of monitoring a unit voltage of each of the plurality of power storage units, and a series charging step of performing series charging on each of the plurality of power storage units while equalizing the unit voltages by individually setting either a charging mode in which an internal power storage portion is charged with a constant current or a bypass mode in which the internal power storage portion is bypassed to stop charging.

In the charging method according to the fourth aspect of the present invention, when the plurality of power storage units is charged in series, a charging mode or a bypass mode is individually set for each of the power storage units while monitoring the voltage of each unit. At this time, a charging voltage is controlled according to the voltage of the power storage unit set to the charging mode, whereby the unit voltages can be equalized while performing series charging on each power storage unit with a constant current. As a result, the charging method of the present invention can reduce the possibility that only some of the power storage units may be overcharged, and can perform charging up to the upper limit of the power capacity of each power storage unit. Therefore, according to the charging method according to the fourth aspect of the present invention, in the charging of the plurality of power storage units connected in series, the reduction in rechargeable power capacity can be suppressed while the capacities of the power storage units are equalized.

A fifth aspect of the present invention, according to claim 5, is a charging method in which, in the foregoing fourth aspect of the present invention, the number of power storage units to be set to the bypass mode is increased as the charging of the plurality of power storage units progresses in the series charging step.

According to the charging method of the fifth aspect of the present invention, in the series charging of the plurality of power storage units, the number of power storage units to be set to the bypass mode increases as the state approaches a full charge state, so that the unit voltages can be equalized more finely.

According to claim 4, the number N_{C} of the power storage units to be set to the charging mode is controlled to be equal to a minimum natural number satisfying N_{C}≥V_{CUTOFF}×N_{TOTAL}/V_{TOTAL} in the series charging step when a discharge termination voltage of the power storage unit is represented by V_{CUTOFF}, a series connection number of the power storage units is represented by N_{TOTAL}, and a total voltage of the plurality of power storage units is represented by V_{TOTAL}.

In the series charging of the plurality of power storage units, the time required for charging can be shortened by increasing the number of power storage units to be set to the charging mode. Further, the unit voltages can be more reliably equalized by increasing the number of power storage units to be set to the bypass mode.

Therefore, it is possible to perform series charging optimizing both the merits by the charging method for controlling the number N_{C} of the power storage units to be set to the charging mode based on the expression of N_{C}≥V_{CUTOFF}×N_{TOTAL}/V_{TOTAL}.

As a result, according to the charging method of the fourth aspect of the present invention, the number of power storage units to be set to the bypass mode can be increased as early as possible while suppressing the charging time to be taken for full charge, and the unit voltages can be equalized more reliably.

A sixth aspect of the present invention is a charging method in which, in any one of the foregoing fourth or fifth aspect of the present invention, in the series charging step, when power outage occurs during charging of the plurality of power storage units, all the power storage units are set to a discharging mode in which charging of internal power storage portions thereof is stopped to discharge the power storage portions.

According to the charging method of the sixth aspect of the present invention, even when power outage occurs during charging, a momentary interruption in a load can be suppressed by setting the respective power storage units to the discharging mode all at once.

### Explanation of Reference Signs

- 1: power storage device
- 2: commercial power source
- 3: load
- 10: control unit
- BBU1 to BBU7: first power storage unit to seventh power storage unit
- BAT: power storage portion
- SW_{C}: charge switch
- SW_{D}: discharge switch
- SW_{B}: bypass switch
- T(+), T(-): charge/discharge terminal

## Claims

1. A power storage device (1) comprising:
a plurality of power storage units (BBU1 to BBU7) connected in series; and
a control unit (10) for monitoring a unit voltage of each of the plurality of power storage units and controlling each of the plurality of power storage units (BBU1 to BBU7), wherein each of the power storage units (BBU1 to BBU7) includes a power storage portion (BAT) and a charge switch (SW_{C}) which are connected to each other in series between charge/discharge terminals (T(-), T(+)), and a bypass switch (SW_{B}) providing a bypass between the charge/discharge terminals (T(-), T(+)), and
for the plurality of power storage units (BBU1 to BBU7) to be charged in series, the control unit (10) is configured to individually set a charging mode in which the power storage portion (BAT) is charged with a constant current by controlling the bypass switch (SW_{B}) to be set to OFF while controlling the charge switch (SW_{C}) to be set to ON, and a bypass mode in which the charging of the power storage portion (BAT) is stopped by controlling the bypass switch (SW_{B}) to be set to ON while controlling the charge switch (SW_{C}) to be set to OFF, thereby equalizing the unit voltages,
wherein the control unit (10) is configured to control a number N_{C} of the power storage units (BBU1 to BBU7) to be set to the charging mode so that the number N_{C} is equal to a minimum natural number satisfying N_{C}≥V_{CUTOFF}×N_{TOTAL}/V_{TOTAL} when a discharge termination voltage of the power storage unit (BBU1 to BBU7) is represented by V_{CUTOFF}, a series connection number of the power storage units is represented by N_{TOTAL}, and a total voltage of the plurality of power storage units (BBU1 to BBU7) is represented by V_{TOTAL}.

2. The power storage device (1) according to claim 1, wherein the control unit (10) is configured to increase a number of the power storage units (BBU1 to BBU7) to be set to the bypass mode as the charging of the plurality of power storage units (BBU1 to BBU7) progresses.

3. The power storage device (1) according to claim 1 or 2, wherein the power storage unit (BBU1 to BBU7) includes a discharge switch (SW_{D}) connected in parallel to the charge switch (SW_{C}), and when power outage occurs during charging of the plurality of power storage units (BBU1 to BBU7), for all the power storage units (BBU1 to BBU7), the control unit (10) in configured to control the charge switches (SW_{C}) and the bypass switches (SW_{B}) to be set to OFF and controls the discharge switches (SW_{D}) to be set to ON.

4. A charging method for charging a plurality of power storage units (BBU1 to BBU7) connected in series, comprising:
a voltage monitoring step of monitoring a unit voltage of each of the plurality of power storage units (BBU1 to BBU7); and
a series charging step of performing series charging on each of the plurality of power storage units (BBU1 to BBU7) while equalizing the unit voltages by individually setting either a charging mode in which an internal power storage portion (BBT) is charged with a constant current or a bypass mode in which the internal power storage portion (BBT) is bypassed to stop charging
wherein, in the series charging step, a number N_{C} of the power storage units (BBU1 to BBU7) to be set to the charging mode is controlled to be equal to a minimum natural number satisfying N_{C}≥V_{CUTOFF}×N_{TOTAL}/V_{TOTAL} when a discharge termination voltage of the power storage unit is represented by V_{CUTOFF}, a series connection number of the power storage units (BBU1 to BBU7) is represented by N_{TOTAL}, and a total voltage of the plurality of power storage units (BBU1 to BBU7) is represented by V_{TOTAL}.

5. The charging method according to claim 4, wherein, in the series charging step, a number of the power storage units (BBU1 to BBU7) to be set to the bypass mode is increased as the charging of the plurality of power storage units (BBU1 to BBU7) progresses.

6. The charging method according to claim 4 or 5, wherein, in the series charging step, when power outage occurs during charging of the plurality of power storage units (BBU1 to BBU7), all the power storage units (BBU1 to BBU7) are set to a discharging mode in which charging of internal power storage portions (BBT) thereof is stopped to discharge the power storage portions (BBT).

## Patentansprüche

1. Energiespeichervorrichtung (1), umfassend:
eine Vielzahl von in Reihe geschalteten Energiespeichereinheiten (BBU1 bis BBU7); und
eine Steuereinheit (10) zum Überwachen einer Einheitsspannung jeder der Vielzahl von Energiespeichereinheiten und zum Steuern jeder der Vielzahl von Energiespeichereinheiten (BBU1 bis BBU7), wobei jede der Energiespeichereinheiten (BBU1 bis BBU7) einen Energiespeicherabschnitt (BAT) und einen Lade-Schalter (SW_{C}) umfasst, die zwischen Lade-/Entladeanschlüssen (T(-), T(+)) in Reihe miteinander verbunden sind, sowie einen Bypass-Schalter (SW_{B}), der einen Bypass zwischen den Lade-/Entladeanschlüssen (T(-), T(+)) bereitstellt, und
damit die Vielzahl von Energiespeichereinheiten (BBU1 bis BBU7) in Reihe geladen werden können, ist die Steuereinheit (10) so konfiguriert, dass sie einen Lade-Modus individuell einstellt, in dem der Energiespeicherabschnitt (BAT) mit einem konstanten Strom geladen wird, indem der Bypass-Schalter (SW_{B}) auf AUS gesetzt wird, während der Lade-Schalter (SW_{C}) auf EIN gesetzt wird, sowie einen Bypass-Modus einzustellen, in dem das Laden des Energiespeicherabschnitts (BAT) gestoppt wird, indem der Bypass-Schalter (SW_{B}) auf EIN gesetzt wird und der Lade-Schalter (SW_{C}) auf AUS gesetzt wird, wodurch die Spannungen der Einheiten ausgeglichen werden,
wobei die Steuereinheit (10) so konfiguriert ist, dass sie eine Anzahl N_{C} der Energiespeichereinheiten (BBU1 bis BBU7) so steuert, dass diese in den Lade-Modus versetzt werden, sodass die Anzahl N_{C} einer minimalen natürlichen Zahl entspricht, die die Bedingung N_{C}≥V_{CUTOFF}×N_{TOTAL}/V_{TOTAL} erfüllt, wenn eine Entlade-Abschaltspannung der Energiespeichereinheit (BBU1 bis BBU7) durch V_{CUTOFF}, eine Reihenschaltungsanzahl der Energiespeichereinheiten durch N_{TOTAL} und eine Gesamtspannung der Vielzahl von Energiespeichereinheiten (BBU1 bis BBU7) durch V_{TOTAL} dargestellt wird.

2. Energiespeichervorrichtung (1) nach Anspruch 1, wobei die Steuereinheit (10) so konfiguriert ist, dass sie die Anzahl der in den Bypass-Modus zu versetzenden Energiespeichereinheiten (BBU1 bis BBU7) im Verlauf des Ladevorgangs der Vielzahl von Energiespeichereinheiten (BBU1 bis BBU7) erhöht.

3. Energiespeichervorrichtung (1) nach Anspruch 1 oder 2, wobei die Energiespeichereinheit (BBU1 bis BBU7) einen Entlade-Schalter (SW_{D}) umfasst, der parallel zum Lade-Schalter (SW_{C}) geschaltet ist, und wenn während des Ladevorgangs der Vielzahl von Energiespeichereinheiten (BBU1 bis BBU7) ein Stromausfall auftritt, die Steuereinheit (10) für alle Energiespeichereinheiten (BBU1 bis BBU7) so konfiguriert ist, dass sie die Lade-Schalter (SW_{C}) und die Bypass-Schalter (SW_{B}) so steuert, dass sie auf AUS gesetzt werden, und die Entlade-Schalter (SW_{D}) so steuert, dass sie auf EIN gesetzt werden.

4. Ladeverfahren zum Laden einer Vielzahl von in Reihe geschalteten Energiespeichereinheiten (BBU1 bis BBU7), umfassend:
einen Spannungsüberwachungsschritt zum Überwachen einer Einheitsspannung jeder der Vielzahl von Energiespeichereinheiten (BBU1 bis BBU7); und
einen Reihenladeschritt, bei dem an jeder der Vielzahl von Energiespeichereinheiten (BBU1 bis BBU7) eine Reihenaufladung durchgeführt wird, während die Einheitsspannungen ausgeglichen werden, indem individuell jeweils entweder ein Lade-Modus, in dem ein interner Energiespeicherabschnitt (BBT) mit einem konstanten Strom geladen wird, oder ein Bypass-Modus, in dem der interne Energiespeicherabschnitt (BBT) umgangen wird, um den Ladevorgang zu unterbrechen, eingestellt wird
wobei in dem Reihenladeschritt eine Anzahl N_{C} der Energiespeichereinheiten (BBU1 bis BBU7), die in den Lade-Modus versetzt werden sollen, so gesteuert wird, dass sie einer minimalen natürlichen Zahl entspricht, die die Bedingung N_{C}≥V_{CUTOFF}×N_{TOTAL}/V_{TOTAL} erfüllt, wenn eine Entlade-Abschaltspannung der Energiespeichereinheit durch V_{CUTOFF}, eine Reihenschaltungsanzahl der Energiespeichereinheiten durch N_{TOTAL} und eine Gesamtspannung der Vielzahl von Energiespeichereinheiten (BBU1 bis BBU7) durch V_{TOTAL} dargestellt wird.

5. Ladeverfahren nach Anspruch 4, wobei in dem Reihenladeschritt die Anzahl der Energiespeichereinheiten (BBU1 bis BBU7), die in den Bypass-Modus versetzt werden sollen, im Verlauf des Ladevorgangs der Vielzahl von Energiespeichereinheiten (BBU1 bis BBU7) erhöht wird.

6. Ladeverfahren nach Anspruch 4 oder 5, wobei in dem Reihenladeschritt, wenn während des Ladevorgangs der Vielzahl von Energiespeichereinheiten (BBU1 bis BBU7) ein Stromausfall auftritt, alle Energiespeichereinheiten (BBU1 bis BBU7) in einen Entlade-Modus versetzt werden, in dem das Laden ihrer internen Energiespeicherabschnitte (BBT) gestoppt wird, um die Energiespeicherabschnitte (BBT) zu entladen.

## Revendications

1. Dispositif de stockage d'énergie (1) comprenant :
une pluralité d'unités de stockage d'énergie (BBU1 à BBU7) connectées en série ; et
une unité de commande (10) destinée à surveiller la tension unitaire de chacune des unités de stockage d'énergie de la pluralité et à commander chacune des unités de stockage d'énergie (BBU1 à BBU7) de la pluralité, dans lequel chacune des unités de stockage d'énergie (BBU1 à BBU7) comprend une partie de stockage d'énergie (BAT) et un commutateur de charge (SW_{C}) qui sont connectés en série entre des bornes de charge/décharge (T(-), T(+)), ainsi qu'un commutateur de dérivation (SW_{B}) assurant une dérivation entre les bornes de charge/décharge (T(-), T(+)), et
afin que la pluralité d'unités de stockage d'énergie (BBU1 à BBU7) soit chargée en série, l'unité de commande (10) est configurée pour définir individuellement un mode de charge dans lequel la partie de stockage d'énergie (BAT) est chargée avec un courant constant en commandant le commutateur de dérivation (SW_{B}) pour qu'il soit mis à l'état OFF tout en commandant le commutateur de charge (SW_{C}) pour qu'il soit mis à l'état ON, et un mode de dérivation dans lequel la charge de la partie de stockage d'énergie (BAT) est arrêtée en commandant le commutateur de dérivation (SW_{B}) pour qu'il soit mis à l'état ON tout en commandant le commutateur de charge (SW_{C}) pour qu'il soit mis à l'état OFF, égaliser ainsi les tensions des unités,
dans lequel l'unité de commande (10) est configurée pour commander un nombre N_{C} d'unités de stockage d'énergie (BBU1 à BBU7) afin qu'elles soient mises en mode de charge de telle sorte que le nombre N_{C} soit égal à un nombre naturel minimal satisfaisant à la condition N_{C}≥V_{CUTOFF}×N_{TOTAL}/V_{TOTAL} lorsque la tension de fin de décharge de l'unité de stockage d'énergie (BBU1 à BBU7) est représentée par V_{CUTOFF}, que le nombre d'unités de stockage d'énergie connectées en série est représenté par N_{TOTAL}, et que la tension totale de la pluralité d'unités de stockage d'énergie (BBU1 à BBU7) est représentée par V_{TOTAL}.

2. Dispositif de stockage d'énergie (1) selon la revendication 1, dans lequel l'unité de commande (10) est configurée pour augmenter le nombre d'unités de stockage d'énergie (BBU1 à BBU7) à régler en mode dérivation à mesure que la charge de la pluralité d'unités de stockage d'énergie (BBU1 à BBU7) progresse.

3. Dispositif de stockage d'énergie (1) selon la revendication 1 ou 2, dans lequel chaque unité de stockage d'énergie (BBU1 à BBU7) comprend un commutateur de décharge (SW_{D}) connecté en parallèle au commutateur de charge (SW_{C}), et lorsqu'une coupure de courant se produit pendant la charge de la pluralité d'unités de stockage d'énergie (BBU1 à BBU7), pour toutes les unités de stockage d'énergie (BBU1 à BBU7), l'unité de commande (10) est configurée pour commander les commutateurs de charge (SW_{C}) et les commutateurs de dérivation (SW_{B}) de manière à ce qu'ils soient mis à l'état OFF, et commande les commutateurs de décharge (SW_{D}) de manière à ce qu'ils soient mis à l'état ON.

4. Procédé de charge destiné à charger une pluralité d'unités de stockage d'énergie (BBU1 à BBU7) connectées en série, comprenant :
une étape de surveillance de tension consistant à surveiller une tension unitaire de chacune des unités de stockage d'énergie (BBU1 à BBU7) de la pluralité ; et
une étape de charge en série consistant à effectuer une charge en série sur chacune des unités de stockage d'énergie (BBU1 à BBU7) tout en égalisant les tensions unitaires en définissant individuellement soit un mode de charge dans lequel une partie de stockage d'énergie interne (BBT) est chargée avec un courant constant, soit un mode de dérivation dans lequel la partie de stockage d'énergie interne (BBT) est contournée pour interrompre la charge
dans laquelle, lors de l'étape de charge en série, un nombre N_{C} d'unités de stockage d'énergie (BBU1 à BBU7) devant être réglées en mode de charge est contrôlé de manière à être égal à un nombre naturel minimal satisfaisant à la condition N_{C}≥V_{CUTOFF}×N_{TOTAL}/V_{TOTAL} lorsque la tension de fin de décharge de l'unité de stockage d'énergie est représentée par V_{CUTOFF}, le nombre d'unités de stockage d'énergie (BBU1 à BBU7) connectées en série est représenté par N_{TOTAL}, et la tension totale de la pluralité d'unités de stockage d'énergie (BBU1 à BBU7) est représentée par V_{TOTAL}.

5. Procédé de charge selon la revendication 4, dans lequel, lors de l'étape de charge en série, le nombre d'unités de stockage d'énergie (BBU1 à BBU7) devant être mises en mode dérivation est augmenté à mesure que la charge de la pluralité d'unités de stockage d'énergie (BBU1 à BBU7) progresse.

6. Procédé de charge selon la revendication 4 ou 5, dans lequel, lors de l'étape de charge en série, lorsqu'une coupure de courant se produit pendant la charge de la pluralité d'unités de stockage d'énergie (BBU1 à BBU7), toutes les unités de stockage d'énergie (BBU1 à BBU7) sont mises en mode de décharge dans lequel la charge de leurs parties de stockage d'énergie internes (BBT) est arrêtée afin de décharger lesdites parties de stockage d'énergie (BBT).
